# FASCICULE DE BREVET EUROPEEN

(11) **EP 2 524 583 B1**
(45) Date de publication et mention de la délivrance du brevet: **19.11.2014**
(21) Numéro de dépôt: 12168104.3
(22) Date de dépôt: 15.05.2012
(51) Int. Cl.: A01B 3/46

(54) **Charrue semi-portée monoroue à largeur de travail réglable**
Aufsatteleinzelradpflug mit Arbeitsbreitenverstellung
Semi-mounted monowheel plough with adjustable working width

(30) Priorité: 19.05.2011 FR 1154358
(43) Date de publication de la demande: 21.11.2012
(73) Titulaire: Kuhn-Huard S.A., 44142 Châteaubriant (FR)
(72) Inventeur: Toublanc, Sylvain, 44110 Châteaubriant (FR)
(74) Mandataire: Esch, Esther Evelyne

(56) Documents cités:
- EP-A1- 0 046 905
- EP-A2- 0 358 537
- DE-A1- 3 615 298
- DE-A1- 10 039 600
- DE-A1- 19 950 523
- FR-A1- 2 174 985
- FR-A1- 2 777 735

## Description

La présente invention se rapporte au domaine technique général du machinisme agricole et en particulier au domaine des charrues. L'invention concerne une charrue semi-portée monoroue comportant un dispositif d'attelage destiné à être lié à un tracteur, un bâti équipé de corps de labour, une roue et un timon guidant ladite roue, ledit bâti présentant un décrochement au niveau de ladite roue pour contourner celle-ci.

Sur une machine de ce genre, qui est décrite dans le brevet EP 0 046 905**,** le bâti de la charrue est pourvu de plusieurs paires de corps de labour et d'une roue d'appui tenue par un timon. La roue d'appui au sol est une roue suiveuse qui s'oriente automatiquement dans la direction d'avance prise par le tracteur. La taille et le diamètre de la roue d'appui, portant cette charrue semi-portée réversible connue, sont limités par la hauteur sous le bâti. Comme le nombre de corps de labour est conditionné par la charge maximale supportée par cette roue lors du transport, la taille de la charrue est limitée. Le bâti présente un décrochement au niveau de la roue d'appui. Le décrochement s'étend vers le terrain déjà labouré. Le décrochement permet au bâti et donc aux corps de labour d'être rapprochés de la roue d'appui.

La charrue présente à l'avant un dispositif de réglage de déport permettant le réglage de la largeur de la première raie de labour. Ce réglage consiste à positionner le premier corps de labour par rapport aux roues du tracteur. Ce réglage est effectué par coulissement pour déplacer le bâti. Comme les corps de labour sont fixés rigidement sur le bâti, leur largeur de coupe reste identique. D'autre part, au transport, la rotation de la roue d'appui autour de son axe vertical doit être bloquée pour que la charrue circule en toute sécurité. De plus, lors de travaux dans des terrains en dévers, la roue ne peut pas retenir la charrue puisqu'elle s'oriente en fonction de la direction d'avance. La roue dérive donc avec la charrue.

La présente invention a pour but de remédier aux inconvénients précités. Elle doit notamment proposer une charrue semi-portée avec un débit de chantier optimisé en fonction des conditions de travail et dont l'entretien est réduit.

A cet effet, une importante caractéristique de l'invention consiste en ce que chaque corps de labour est lié audit bâti au moyen d'une première articulation respective, que lesdits corps de labour sont reliés entre eux par l'intermédiaire d'un mécanisme de commande intégré audit bâti, que chaque corps de labour est lié audit mécanisme de commande au moyen d'une deuxième articulation respective et que ledit mécanisme de commande comporte au moins une tringle droite et une tringle courbe. Grâce aux articulations et au mécanisme de réglage, la largeur de travail des corps de labour est adaptable rapidement pour une utilisation optimale des corps de labour en fonction des conditions de travail et de la puissance de traction du tracteur. Le débit de chantier élevé est garanti par l'adaptation de la largeur de travail en fonction de la parcelle, de son relief et du type de sol. Grâce au réglage de la largeur de travail au cours du travail, la finition des parcelles se fait au plus près des limites et les raies contournant un obstacle peuvent être redressées au fur et à mesure. L'utilisation d'un mécanisme de commande intégré évite un nettoyage manuel pour enlever la terre et les débris végétaux. Les travaux d'entretien sont donc réduits.

D'autres caractéristiques et avantages de l'invention se dégageront de la description qui va suivre en regard des dessins annexés qui ne sont donnés qu'à titre d'exemples non limitatifs de l'invention. Sur ces dessins :
- la **figure 1** représente une charrue selon la présente invention en vue de dessus,
- la **figure 2** est une vue de dessus et à plus grande échelle, d'une partie de la charrue,
- la **figure 3** est une vue en perspective à plus grande échelle de la charrue dans une position de travail.

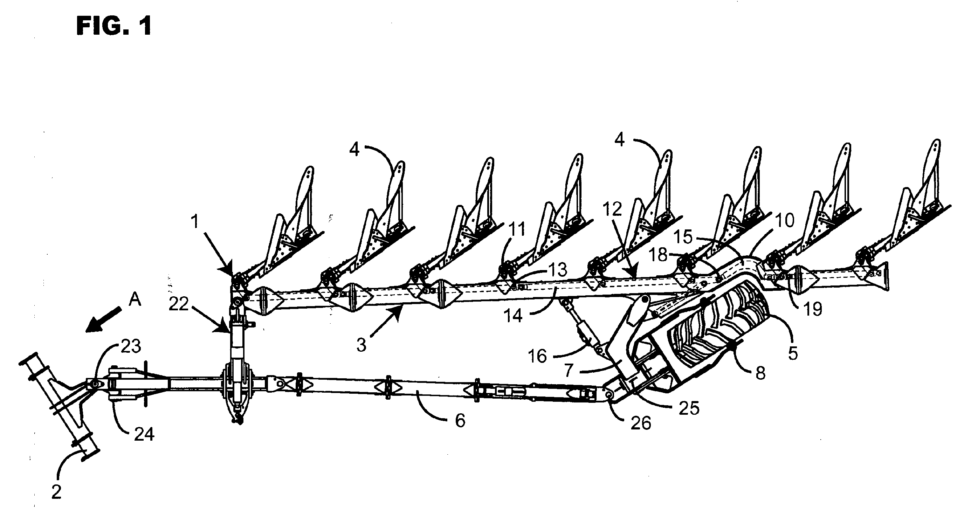

La figure 1 représente une charrue (1) semi-portée conforme à l'invention selon une vue de dessus. La charrue (1) est représentée dans une position de travail. La charrue (1) comporte un dispositif d'attelage (2) destiné à être lié à un tracteur (non représenté), un bâti (3) équipé de corps de labour (4), une roue (5) et un timon (6) guidant ladite roue (5). Le timon (6) prend appui à l'avant sur la structure d'attelage (2) et à l'arrière sur un bras de roue (7). La charrue (1) est reliée en particulier au système de relevage du tracteur par l'intermédiaire des bras inférieurs et de la barre supérieure. Le tracteur tire la charrue (1) suivant une direction d'avance indiquée par la flèche (A). Dans la suite de la description, les notions suivantes "avant", "arrière" et "devant", "derrière" sont définies par rapport au sens d'avance (A). Lorsque le tracteur tire la charrue (1), les corps de labour (4), qui sont des pièces travaillantes, découpent, soulèvent et retournent la bande de terre.

La charrue représentée s'appuie sur le sol au moyen d'une seule roue (5), il s'agit d'une charrue monoroue. La roue d'appui (5) roule sur le sol en pivotant autour d'un axe de roue (8) sensiblement horizontal et perpendiculaire à la direction d'avance (A). Cette roue (5) a pour fonction de contrôler la profondeur des corps de labour (4) durant le travail et de sortir les corps de labour (4) de terre pour effectuer les manoeuvres en bout de champ. La roue (5) porte aussi la charrue (1) lors du transport. La roue d'appui (5) s'étend sensiblement à l'arrière du bâti (3) et latéralement par rapport au bâti (3). Sa disposition est telle que généralement le dernier corps de labour recouvre son passage. La roue (5) est apte à déplacer le bâti (3) en hauteur par rapport au sol au moyen d'un vérin. Le vérin à simple effet est susceptible de déplacer le bâti (3) entre une position basse de travail et une position haute de manoeuvres ou de transport, et vice versa. Le vérin s'étend entre le timon (6) et le bras de roue (7). Dans une alternative, le vérin simple effet est remplacé par un vérin à double effet.

D'après la figure 1, les corps de labour (4) sont répartis sur toute la longueur dudit bâti (3). Le bâti (3) est monobloc, fait d'une seule pièce. Le bâti (3) de la charrue semi-portée monoroue est rigide. Le bâti (3) présente un décrochement (10) au niveau de ladite roue (5). Le bâti (3) est réalisé globalement par une poutre droite et le décrochement (10) permet de relier les deux parties droites de la poutre pour contourner la roue (5). Grâce au décrochement (10), la roue (5) est maintenue à proximité du bâti (3) ce qui réduit la zone non labourée puisqu'elle ne dépasse pas du bâti (3). La roue d'appui (5) conserve sa liberté d'orientation grâce au décrochement (10). Dans l'exemple de réalisation représenté, le décrochement (10) présente une forme d'arc dont l'angle d'ouverture est compris entre 60° et 120°. L'arc étant une portion de cercle délimitée par deux points.

Selon des importantes caractéristiques de l'invention, chaque corps de labour (4) est lié audit bâti (3) au moyen d'une première articulation (11) respective, lesdits corps de labour (4) sont reliés entre eux par l'intermédiaire d'un mécanisme de commande (12) intégré dans ledit bâti (3), chaque corps de labour (4) est lié audit mécanisme de commande (12) au moyen d'une deuxième articulation (13) respective et ledit mécanisme de commande (12) comporte au moins une tringle droite (14) et une tringle courbe (15). Grâce aux articulations (11, 13) et au mécanisme de commande (12), la largeur de travail de la charrue (1) est adaptée à toutes conditions de labour. Elle est adaptée en fonction du relief, du type de sol de la parcelle et de la puissance du tracteur. La correction de la largeur de travail peut aussi être effectuée durant le travail pour tenir compte du changement de l'état par exemple l'humidité et/ou la variation de la composition de la parcelle. Etant donné que la largeur de travail est adaptée aux conditions, le débit de chantier est optimal. En étant à l'intérieur du bâti (3), le mécanisme de commande (12) est protégé des agressions extérieures comme des chocs. La terre et les débris ne peuvent pas s'accumuler sur les tringles (14, 15). De plus, l'implantation à l'intérieur du bâti (3) permet d'utiliser un mécanisme de commande (12) simple avec un nombre réduit de composants.

Selon un autre avantage du réglage de la largeur de travail au cours du travail, les parcelles sont finies au plus près des limites et les raies de labour peuvent être redressées après que la charrue ait contourné un obstacle.

Selon l'invention, tous les corps de labour (4) sont reliés entre eux par un mécanisme de commande (12) de telle manière que leur largeur de coupe soit augmentée ou diminuée simultanément. L'orientation ou la largeur de coupe des corps de labour (4) est gérée par un actionneur (16). L'actionneur (16) s'étend entre le bâti (3) et le bras de roue (7). Cet actionneur (16) est un vérin hydraulique à double effet. Chacun des corps de labour (4) est articulé sur le bâti (3) via une première articulation (11) respective, d'axe longitudinal au moins sensiblement vertical lorsque ladite charrue (1) est dans une configuration de travail. En pivotant autour de la première articulation (11), le corps de labour (4) peut se rapprocher ou s'éloigner du bâti (3) et donc travailler une bande de terre de largeur différente. Pour un réglage centralisé de la largeur de travail pour tous les corps de labour (4), chacun est lié au mécanisme de commande (12) via une deuxième articulation (13) respective d'axe longitudinal au moins sensiblement vertical lorsque ladite charrue (1) est dans une configuration de travail.

Pour que la charrue (1) travaille dans de bonnes conditions, la roue (5) doit toujours être parallèle aux corps de labour (4) qui sont parallèles à la direction d'avance (A). La roue (5) est ainsi aussi reliée au mécanisme de commande (12) via une tringle de roue (17). Le mécanisme de commande (12) sert donc à régler la largeur des sillons et l'axe de traction tracteur/charrue. La tringle de roue (17) est reliée au bras de roue (7). De la sorte, lorsque la largeur de travail est modifiée, l'orientation de la roue (5) est corrigée en conséquence. La roue (5) permet à la charrue (1) de maintenir les corps de labour (4) parallèles à la direction d'avance (A). Le décrochement (10) permet au bâti (3) de contourner la partie arrière de la roue (5) et de figer la position extrême vers l'arrière et latéralement en direction du labour de cette roue (5).

Dans l'exemple de réalisation représenté à la figure 1, la charrue (1) est équipée de huit corps de labour (4). Elle peut donc travailler une grande largeur de terrain en un passage. La roue (5) évolue sur le terrain non labouré qui est encore pourvu de végétations. La trace de la roue (5) sera effacée par le travail des deux derniers corps de labour. On remarque que l'un des corps de labour est lié sur le décrochement (10) et que l'orientation de l'axe de roue (8) est sensiblement identique à l'orientation du tracteur. On remarque que le bâti (3) est réalisé en plusieurs parties assemblées par boulons. Le bâti (3) est réalisé par une poutre creuse apte à recevoir le mécanisme de commande (12). Le mécanisme de commande (12) des corps de labour (4) est sensiblement parallèle audit bâti (3). Le bâti (3) est composé de deux extensions avant, d'une partie centrale présentant le décrochement (10) et d'une extension arrière. Le découpage du mécanisme de commande (12) correspond sensiblement au découpage du bâti (3) pour des raisons de montage. Des tringles droites correspondent aux extensions avant et arrière. La partie centrale du bâti (3) présente une tringle droite (14) et une tringle courbe (15). Toutes les tringles composant le mécanisme de commande (12) sont reliées pour que le réglage de la largeur de travail soit centralisé.

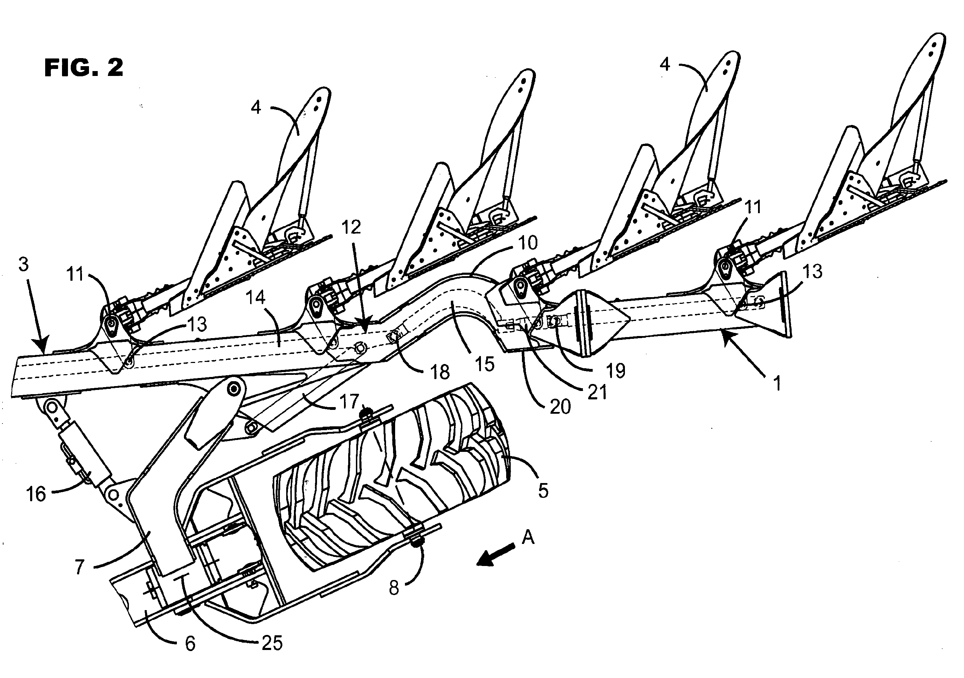

La figure 2 représente, plus en détail, l'environnement autour de la roue (5) et le décrochement (10). La charrue (1) se trouve dans la même position que sur la figure 1. D'après cette figure, la section transversale du décrochement (10) est sensiblement identique à la section transversale du bâti (3). La tringle courbe (15) présente une forme correspondant au décrochement (10) pour que cette dernière puisse être intégrée dans le bâti (3). La tringle courbe (15) a une forme qui s'infléchit en arc de cercle avec un angle d'ouverture compris entre 60° et 120°. Elle présente une forme de banane. La tringle courbe (15) s'étend entre la tringle droite (14) de la partie centrale et la tringle droite de l'extension arrière. Ainsi, la tringle courbe (15) est liée à la tringle droite (14) par une articulation avant (18) et à la tringle de l'extension arrière par une articulation arrière (19). Les articulations avant et arrière (18, 19) présentent un axe sensiblement vertical au travail. Les tringles droites (14) supportent des contraintes de traction et de compression alors que la tringle courbe (15) est dimensionnée pour supporter des contraintes de flexion. Pour le montage du mécanisme de commande (12), les tringles droites sont insérées par l'une des extrémités dans les extensions ou dans la partie centrale du bâti (3). Le bâti (3) présentant des trous au voisinage des deuxièmes articulations (13) pour relier les tringles.

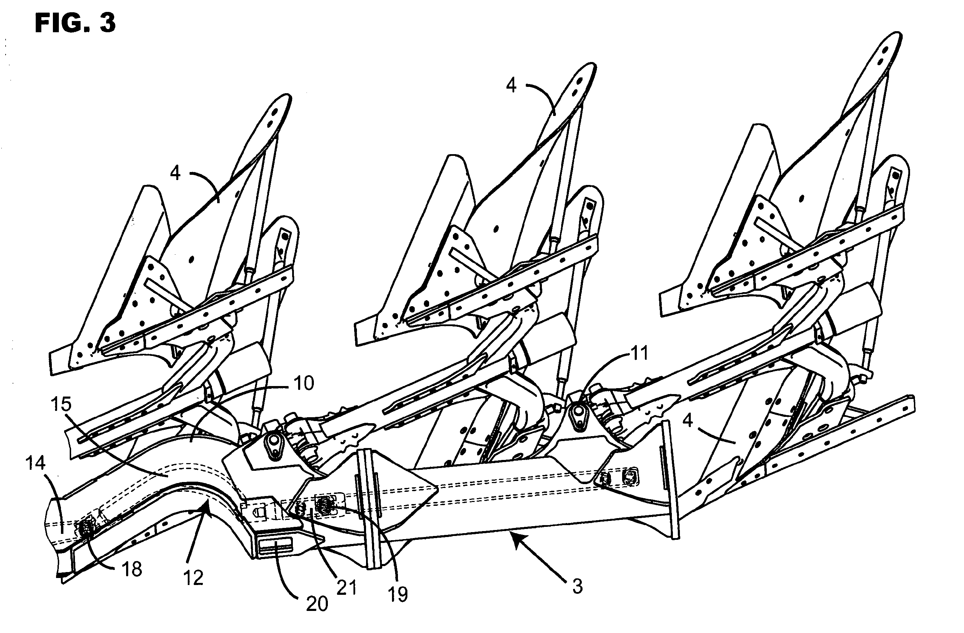

D'après la figure 3, le montage de la tringle courbe (15) se fait, pour sa part, par une ouverture (20) spécialement ménagée dans le bâti (3). Cette ouverture (20) s'étend au niveau du décrochement (10). L'ouverture (20) est ménagée sur la face latérale dudit bâti (3), en regard de ladite roue (5), lequel s'étend en position de travail. La taille de l'ouverture (20) est telle que la résistance du bâti (3) n'est pas diminuée. L'ouverture (20) est obturée pour éviter l'introduction de terre dans le bâti (3). Cette ouverture (20) de taille réduite permet l'introduction de la tringle courbe (15). On remarque que la liaison de la tringle courbe (15) à la tringle de l'extension arrière nécessite l'insertion d'une petite tringle (21). Cette petite tringle (21) est insérée par l'arrière de la partie centrale du bâti (3) et elle est vissée dans la tringle courbe (15).

Selon un exemple de réalisation non représenté, l'ouverture est ménagée dans ledit bâti (3) selon un plan sensiblement horizontal, ledit bâti (3) s'étendant en position de travail. Selon un autre exemple de réalisation non représenté, l'ouverture est ménagée dans ledit bâti (3) selon un plan sensiblement vertical, ledit bâti (3) s'étendant en position de travail. Dans ces deux cas, l'ouverture étant bien plus conséquente, la petite tringle et la tringle courbe sont réalisées en une seule pièce.

Dans un autre exemple de réalisation lorsqu'il n'y a pas d'extension arrière, la tringle courbe (15) est uniquement reliée à la tringle droite (14). La liaison est réalisée par une articulation avant.

A la lumière de la figure 3, les corps de labour (4) sont répartis suivant deux groupes, chacun étant actif dans une position de travail respective. On dit que la charrue (1) est réversible. Ainsi, la charrue (1) comporte un dispositif de retournement (22) permettant de relier le bâti (3) au timon (6). Sous l'action du dispositif de retournement (22), le bâti (3) est capable de pivoter par rapport à un axe longitudinal matérialisé par le timon (6) pour passer d'une position de travail à une autre. Ainsi, les corps de labour droits et gauches sont mis successivement en service par rotation du bâti (3) d'un demi-tour correspondant à 180°. Le timon (6) est disposé entre le dispositif d'attelage (2) et le bâti (3). Le timon (6) est relié à l'avant par l'intermédiaire d'un axe vertical (23) suivi d'un axe transversal (24) sensiblement horizontal sur le dispositif d'attelage (2). L'axe vertical (23) permet un meilleur suivi du tracteur notamment dans les fourrières et l'axe transversal (24) autorise un débattement du bâti (3) pour mieux suivre le relief du terrain. Au niveau de la roue (5), le bâti (3) pivote autour d'un axe horizontal (25) dirigé sensiblement parallèlement à la direction d'avance (A). Le timon (6) est relié par l'intermédiaire d'une articulation verticale (26) à ladite roue d'appui (5). Le dispositif de retournement (22) est constitué avantageusement de deux vérins hydrauliques à simple ou double effet. Pour positionner la charrue dans sa position de transport, le dispositif de retournement (22) pivote d'un quart de tour correspondant à 90° à partir d'une des positions de travail. Au transport, les axes des premières articulations (11) des corps de labour (4) s'étendent sensiblement horizontalement et perpendiculairement à la direction d'avance (A). Etant donné que le bâti (3) est rapproché de la roue (5) grâce au décrochement (10), le balourd, c'est-à-dire le couple résistant lors de retournement, est réduit.

Il est bien évident que l'invention n'est pas limitée au mode de réalisation décrit ci-dessus et représenté sur les dessins annexés. Des modifications restent possibles, notamment en ce qui concerne la constitution ou le nombre des divers éléments ou par substitution d'équivalents techniques, sans pour autant sortir du domaine de protection tel qu'il est défini par les revendications suivantes.

## Revendications

1. Charrue (1) semi-portée monoroue comportant un dispositif d'attelage (2) destiné à être lié à un tracteur, un bâti (3) équipé de corps de labour (4), une roue (5) et un timon (6) guidant ladite roue (5), ledit bâti (3) présentant un décrochement (10) au niveau de ladite roue (5) pour contourner celle-ci, ***caractérisée en ce que*** chaque corps de labour (4) est lié audit bâti (3) au moyen d'une première articulation (11) respective, que lesdits corps de labour (4) sont reliés entre eux par l'intermédiaire d'un mécanisme de commande (12) intégré dans ledit bâti (3), que chaque corps de labour (4) est lié audit mécanisme de commande (12) au moyen d'une deuxième articulation (13) respective et que ledit mécanisme de commande (12) comporte au moins une tringle droite (14) et une tringle courbe (15).

2. Charrue selon la revendication 1, ***caractérisée en ce que*** ladite tringle courbe (15) est destinée à être logée dans ledit décrochement (10) dudit bâti (3).

3. Charrue selon la revendication 1 ou 2, ***caractérisée en ce que*** ladite tringle courbe (15) présente une forme d'arc de cercle avec un angle d'ouverture compris entre 60° et 120°.

4. Charrue selon l'une quelconque des revendications 1 à 3, ***caractérisée en ce* que** ladite tringle courbe (15) est liée à l'une desdites tringles droites (14) au moyen d'une articulation avant (18) d'axe sensiblement vertical.

5. Charrue selon l'une quelconque des revendications 1 à 4, ***caractérisée en ce que*** la section transversale dudit décrochement (10) est sensiblement identique à la section transversale dudit bâti (3).

6. Charrue selon l'une quelconque des revendications 1 à 5, ***caractérisée en ce que*** ledit mécanisme de commande (12) présente, en sus, un actionneur (16).

7. Charrue selon l'une quelconque des revendications 1 à 6, ***caractérisée en ce que*** ledit bâti (3) présente une ouverture (20) au niveau dudit décrochement (10).

8. Charrue selon la revendication 7, ***caractérisée en ce que*** ladite ouverture (20) est ménagée sur la face latérale dudit bâti (3), en regard de ladite roue (5), lequel s'étend en position de travail.

9. Charrue selon la revendication 7, ***caractérisée en ce que*** ladite ouverture (20) est ménagée dans ledit bâti (3) selon un plan sensiblement horizontal, ledit bâti (3) s'étendant en position de travail.

10. Charrue selon la revendication 7, ***caractérisée en ce que*** ladite ouverture (20) est ménagée dans ledit bâti (3) selon un plan sensiblement vertical, ledit bâti (3) s'étendant en position de travail.

## Patentansprüche

1. Aufsatteleinzelradpflug (1) mit einer Kupplungsvorrichtung (2), die dazu bestimmt ist, mit einem Traktor verbunden zu werden, einem Gestell (3), das mit Pflugkörpern (4) versehen ist, einem Rad (5) und einer Deichsel (6), die das Rad (5) führt, wobei das Gestell (3) eine Ausnehmung (10) im Bereich des Rades (5), um dieses zu umgehen, aufweist, ***dadurch gekennzeichnet,* dass** jeder Pflugkörper (4) mit dem Gestell (3) mittels eines ersten jeweiligen Gelenks (11) verbunden ist, dass die Pflugkörper (4) miteinander durch einen Steuermechanismus (12), der in das Gestell (3) integriert ist, verbunden sind, dass jeder Pflugkörper (4) mit dem Steuermechanismus (12) mittels eines zweiten jeweiligen Gelenks (13) verbunden ist, und dass der Steuermechanismus (12) mindestens ein gerades Gestänge (14) und ein gebogenes Gestänge (15) aufweist.

2. Pflug nach Anspruch 1, ***dadurch gekennzeichnet,* dass** das gebogene Gestänge (15) dazu bestimmt ist, in der Ausnehmung (10) des Gestells (3) angeordnet zu werden.

3. Pflug nach Anspruch 1 oder 2, ***dadurch gekennzeichnet,* dass** das gebogene Gestänge (15) eine Kreisbogenform mit einem Öffnungswinkel zwischen 60° und 120° aufweist.

4. Pflug nach irgen einem der Ansprüche 1 bis 3, ***dadurch gekennzeichnet,* dass** das gebogene Gestänge (15) mit einem der geraden Gestänge (14) mittels eines vorderen Gelenks (18) mit einer im Wesentlichen vertikalen Achse verbunden ist.

5. Pflug nach irgend einem der Ansprüche 1 bis 4, ***dadurch gekennzeichnet,* dass** der Querschnitt der Ausnehmung (10) im Wesentlichen mit dem Querschnitt des Gestells (3) identisch ist.

6. Pflug nach irgend einem der Ansprüche 1 bis 5, ***dadurch gekennzeichnet,* dass** der Steuermechanismus (12) zusätzlich ein Betätigungselement (16) aufweist.

7. Pflug nach irgend einem der Ansprüche 1 bis 6, ***dadurch gekennzeichnet,* dass** das Gestell (3) eine Öffnung (20) im Bereich der Ausnehmung (10) aufweist.

8. Pflug nach Anspruch 7, ***dadurch gekennzeichnet,* dass** die Öffnung (20) auf der Seitenfläche des Gestells (3) gegenüber dem Rad (5), welches sich in Arbeitsstellung erstreckt, ausgeführt ist.

9. Pflug nach Anspruch 7, ***dadurch gekennzeichnet,* dass** die Öffnung (20) in dem Gestell (3) in einer im Wesentlichen horizontalen Ebene ausgeführt ist, wobei sich das Gestell (3) in Arbeitsstellung erstreckt.

10. Pflug nach Anspruch 7, ***dadurch gekennzeichnet,* dass** die Öffnung (20) in dem Gestell (3) in einer im Wesentlichen vertikalen Ebene ausgeführt ist, wobei sich das Gestell (3) in Arbeitsstellung erstreckt.

## Claims

1. Semi-mounted monowheel plough (1) comprising a hitching device (2) intended to be connected to a tractor, a frame (3) equipped with plough bodies (4), a wheel (5) and a beam (6) guiding the said wheel (5), the said frame (3) having a recess (10) at the level of the said wheel (5) to pass around the latter, ***characterized in* that** each plough body (4) is connected to the said frame (3) by a first respective articulation (11), that the said plough bodies (4) are connected with each other via a control mechanism (12) integrated in the said frame (3), that each plough body (4) is connected to the said control mechanism (12) by a second respective articulation (13) and that the said control mechanism (12) comprises at least one straight bar (14) and a curved bar (15).

2. Plough according to Claim 1, ***characterized in* that** the said curved bar (15) is intended to be housed in the said recess (10) of the said frame (3).

3. Plough according to Claim 1 or 2, ***characterized in* that** the said curved bar (15) has a shape of a circular arc with an opening angle comprised between 60° and 120°.

4. Plough according to anyone of Claims 1 to 3, ***characterized in* that** the said curved bar (15) is connected to one of the said straight bars (14) by a front articulation (18) having a substantially vertical axis.

5. Plough according to anyone of Claims 1 to 4, ***characterized in* that** the transverse section of the said recess (10) is substantially identical to the transverse section of the said frame (3).

6. Plough according to anyone of Claims 1 to 5, ***characterized in* that** the said control mechanism (12) has, in addition, an actuator (16).

7. Plough according to anyone of Claims 1 to 6, ***characterized in* that** the said frame (3) has an opening (20) at the level of the said recess (10).

8. Plough according to Claim 7, ***characterized in* that** the said opening (20) is arranged on the lateral face of the said frame (3), facing the said wheel (5), which frame extends in the work position.

9. Plough according to Claim 7, ***characterized in* that** the said opening (20) is arranged in the said frame (3) according to a substantially horizontal plane, the said frame (3) extending in the work position.

10. Plough according to Claim 7, ***characterized in* that** the said opening (20) is arranged in the said frame (3) according to a substantially vertical plane, the said frame (3) extending in the work position.
